**Europäisches Patentamt**

**European Patent Office**

**Office européen des brevets**

(19)

(11) Veröffentlichungsnummer: **0 104 357**
**B1**

(12) **EUROPÄISCHE PATENTSCHRIFT**

(45) Veröffentlichungstag der Patentschrift:
**20.11.86**

(51) Int. Cl.⁴: **G 10 K 11/16**

(21) Anmeldenummer: **83107434.9**

(22) Anmeldetag: **28.07.83**

(54) **Schalldämmungsauskleidung.**

(30) Priorität: **25.09.82 DE 3235539**

(43) Veröffentlichungstag der Anmeldung:
**04.04.84 Patentblatt 84/14**

(45) Bekanntmachung des Hinweises auf die Patenterteilung:
**20.11.86 Patentblatt 86/47**

(84) Benannte Vertragsstaaten:
**CH DE FR GB IT LI**

(56) Entgegenhaltungen:
**DE - A - 2 915 823**
**DE - A - 2 946 392**
**DE - A - 3 150 116**
**FR - A - 2 415 854**
**US - A - 4 330 046**

(73) Patentinhaber: **AUDI AG, Postfach 220,**
**D-8070 Ingolstadt (DE)**

(72) Erfinder: **van den Boom, Johannes,**
**Marie-Luise-Fleisser-Strasse 16, D-8073 Kösching (DE)**
Erfinder: **Blatt, Georg, Regensburger Strasse 153,**
**D-8070 Ingolstadt (DE)**
Erfinder: **Kuipers, Geert, Am Kirchweg 1a,**
**D-8070 Ingolstadt (DE)**
Erfinder: **Hollerweger, Heinz, Effnerstrasse 20,**
**D-8070 Ingolstadt (DE)**

(74) Vertreter: **Le Vrang, Klaus, AUDI AG**
**Postfach 220 Patentabteilung, D-8070 Ingolstadt (DE)**

## Beschreibung

Die Erfindung betrifft eine Schalldämmungsauskleidung nach dem Oberbegriff des Anspruchs 1.

Derartige Schalldämmungsauskleidungen sind beispielsweise im Kraftfahrzeugbau allgemein üblich, um insbesondere die Motorgeräusche von Verbrennungsmotoren herabzusetzen. So wird auf der abstrahlenden Fläche üblicherweise eine elastische und absorptionsfähige, vorzugsweise offenporige Schicht aufgebracht, die mit einer Deckschicht abgeschlossen wird.

Aus der DE-A 29 46 392 ist eine Schalldämmauskleidung bekannt, die zwischen zwei Schichten eine weitere feste, mit Bohrungen versehene Schicht aufweist, die durch Abstandshalter in festem Abstand von der Deckschicht gehalten wird. Der Abstandsraum ist luftgefüllt. Die zwischengelagerte Schicht wird durch die Abstandshalter durch die Deckschicht zwangserregt, sie trägt damit zur Geräuschdämmung wenig bei, eine Abstimmung auf einen bestimmten Frequenzbereich ist nicht möglich.

Versuche haben gezeigt, dass die Wirksamkeit der Schalldämmung erst bei ca. 500 Hz einsetzt und dann mit höherer Frequenz ständig zunimmt. Andererseits zeigt das Geräuschspektrum insbesondere eines 5- oder 6-Zylinder-Verbrennungsmotors eine besonders intensive Luft- und Körperschallanregung in einem Bereich zwischen 250 und 650 Hz, also im wesentlichen in einem Bereich, in dem die Schalldämmung herkömmlicher Auskleidungen nicht optimal ist.

Aufgabe der Erfindung ist es, eine Schalldämmungsauskleidung zu schaffen, die die Schalldämmung insbesondere im Bereich unterhalb von 1 kHz verbessert.

Die Aufgabe wird gelöst durch den Anspruch 1.

Es wird also erfindungsgemäss eine Schalldämmungsauskleidung geschaffen, die zwischen Deckschicht und Materialschicht, üblicherweise der geräuschabstrahlenden Blechschicht, eine Tilgerschicht aufweist, die beiderseitig mit Absorptionsmaterial in unterschiedlicher Steifigkeit versehen ist. Versuche haben ergeben, dass insbesondere im Bereich zwischen ca. 200 Hz und 1 kHz durch den erfindungsgemässen Aufbau der Schicht eine verbesserte Schalldämmung erreicht wird.

Bevorzugte Ausführungsformen der Erfindung ergeben sich aus den Unteransprüchen.

Im folgenden soll die Erfindung anhand der beigefügten Zeichnung in einem Ausführungsbeispiel im einzelnen dargestellt werden.

Es zeigen:

Fig. 1 die Schnittansicht durch eine herkömmliche Schalldämmungsauskleidung;

Fig. 2 die Darstellung der Schalldämmung in Abhängigkeit von der Frequenz der Auskleidung nach Fig. 1;

Fig. 3 ein Modell für das Dämmungsverhalten der Auskleidung nach Fig. 1;

Fig. 4 einen Schnitt durch die erfindungsgemässe Schalldämmungsauskleidung;

Fig. 5 eine Aufsicht auf die Tilgerschicht entsprechend dem Schnitt V–V in Fig. 4;

Fig. 6 ein Modell zur Erklärung des Dämmungsverhaltens der Auskleidung nach Fig. 4; und

Fig. 7 die Abhängigkeit des Dämmungsverhaltens von der Frequenz der erfindungsgemässen Auskleidung.

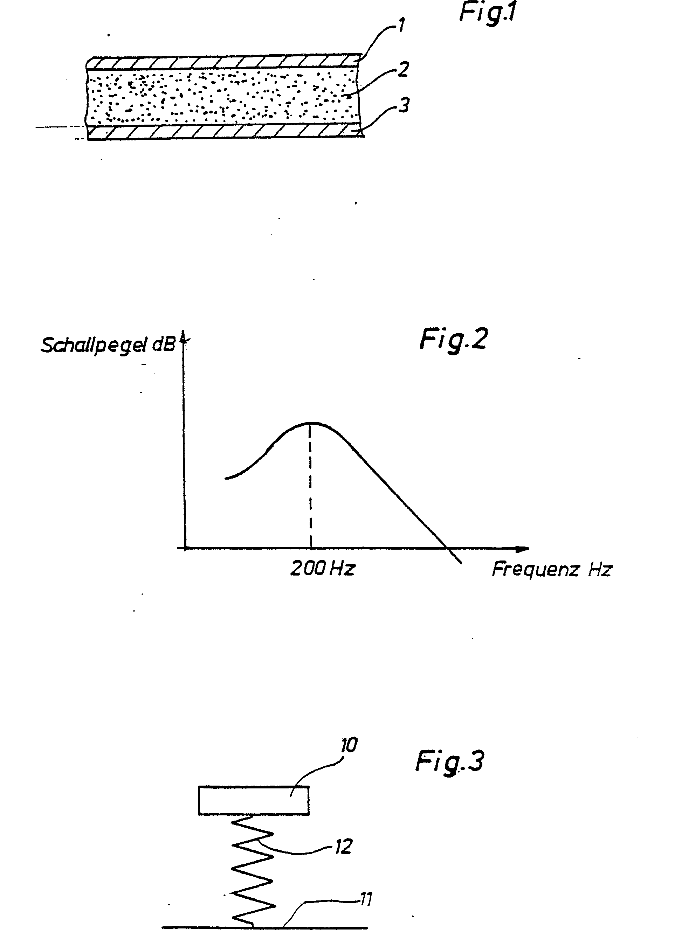

In Fig. 1 ist eine herkömmliche Schalldämmungsauskleidung dargestellt. Mit dem Bezugszeichen 3 ist die schallabstrahlende Materialschicht, üblicherweise eine Blechschicht, dargestellt, die den sie erreichenden Körperschall und Luftschall abstrahlt. Um die Abstrahlung zu verringern und somit das Geräusch zu dämpfen, ist eine Absorptionsschicht 2 vorgesehen, die von einer schwereren Deckschicht 1 abgeschlossen wird.

In Fig. 2 ist graphisch dargestellt, wie das Dämpfungsverhalten von der Frequenz abhängt. In der graphischen Darstellung ist in der x-Achse die Frequenz aufgetragen, während die y-Achse den Abstrahlpegel zeigt. Aus der Darstellung geht hervor, dass bei niedriger Frequenz der Abstrahlpegel zunächst mit wachsender Frequenz zunimmt, um dann in einem Bereich ab ca. 200 Hz abzufallen. Der Abfall beträgt dann etwa 12 dB/Oktave, und der gut isolierende Frequenzbereich setzt bei üblicher Bauart etwa bei ca. 500 Hz ein. Die Schalldämmung steigt mit wachsender Frequenz ständig weiter und besitzt ab ca. 3 kHz eine sehr hohe Schalldämmung, die technisch bereits gar nicht mehr notwendig wäre.

Im Funktionsmodell, das in Fig. 3 dargestellt ist, kann dieses Verhalten in etwa folgendermassen dargestellt werden. Der abstrahlenden Materialschicht 3 entspricht der Fusspunkt einer Feder 12, die durch ein frei aufgehängtes Massestück 10 belastet ist, das der Deckschicht 1 entspricht. Die Feder 12 entspricht dem Absorptionsmaterial 2. Die Steifigkeit der Feder setzt sich zusammen aus der Summe der Kompressionssteifigkeit der Luftschicht und der Skelettsteifigkeit der Absorptionsschicht. Die positive Wirkung des Absorptionsmaterials dabei ist, dass die bei diesen schnellen Vorgängen im akustischen Schwingungsbereich adiabatische Kompression umgesetzt wird in eine isotherme Kompression.

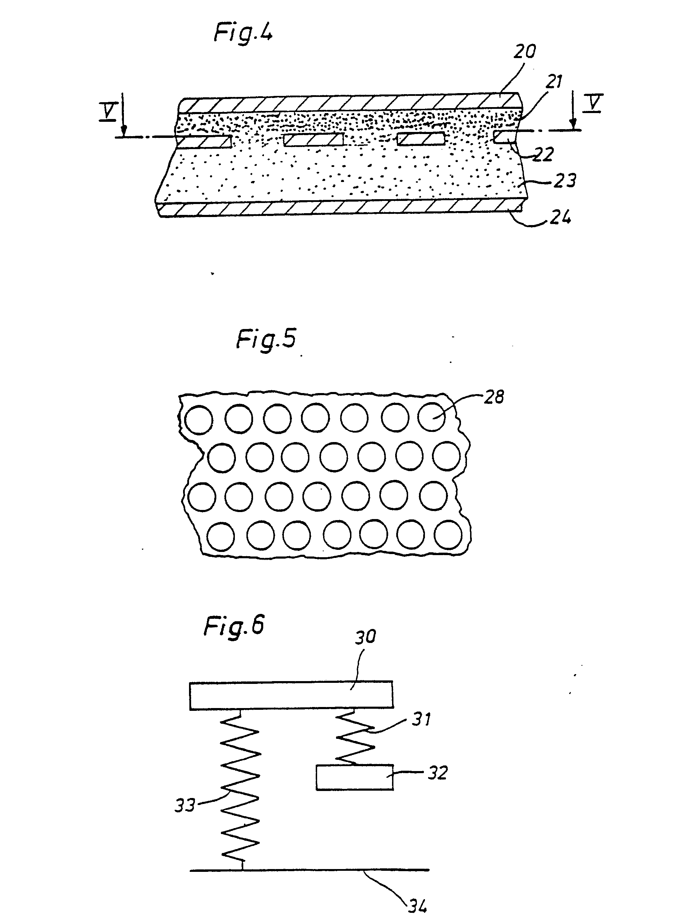

Um nun in gewünschter Weise das Schalldämmungsverhalten der Auskleidung zu beeinflussen, wurde der in Fig. 4 im Schnitt dargestellte erfindungsgemässe Aufbau der Auskleidung vorgenommen: Auf die Materialschicht 24, üblicherweise die Blechschicht, die den Schall abstrahlt, wird eine Absorptionsschicht 23 aufgebracht. Diese Absorptionsschicht 23 schliesst ab mit einer Tilgerschicht 22, die über eine weitere Absorptionsschicht 21 mit der Deckschicht 20 verbunden ist. Dabei entspricht das Absorptionsmaterial 23 dem Absorptionsmaterial 2 aus Fig. 1, während sozusagen die Deckschicht 1 aus Fig. 1 aufgespalten ist in die Tilgerschicht 22, die darüberliegende Absorptionsschicht 21 und die Deckschicht 20. Das Absorptionsmaterial 21 ist verhältnismässig steif im Vergleich zum Absorptionsmaterial 23, jedoch ebenfalls offenporig. Die Tilgerschicht 22 ist, wie auch aus Fig. 5 zu entnehmen, mit Öffnungen oder Perforationen 28 versehen, um einen ungehinderten Luftdurchtritt zwischen der offenporigen Absorptionsschicht 21 und der offenporigen Absorptionsschicht 23 zu ermöglichen, da zwischen den beiden Materialien eine gewisse Koppelung stattfinden soll.

Die Funktionsweise dieses Systems ist, wie in Fig. 6 dargestellt, mit folgendem Modell plausibel zu machen: Der Materialschicht 24 entspricht wiederum der Fusspunkt 34 einer Feder 33, wobei die Feder 33, genau wie in dem Modell nach Fig. 3, durch den Fusspunkt erregt wird. Die Verbindung zwischen dem Fusspunkt 34, entsprechend der Materialschicht 24, und dem durch die Massen 30 und 32, die elastisch über 31 gekoppelt sind, gebildeten System wird mit Hilfe der Feder 33 repräsentiert. Das System 30, 31 und 32 ist ein Modell für die Schichten 20, 21 und 22, wobei die Deckschicht 20 der Masse 30 entspricht, die Tilgerschicht 22 der Tilgermasse 32 und die elastische Verbindung 31 zwischen Deckschicht 20 und Tilgerschicht 22 der Feder 31. Es sei jedoch darauf hingewiesen, dass die Parallelen zwischen diesem Modell nach Fig. 6 und dem Aufbau nach Fig. 4 nicht vollständig sind, denn die Federkonstante der Feder 33 wird gebildet durch die Kompressionssteifigkeit der Gesamtluftschicht zwischen Deckschicht 20 und Materialschicht 24, während die Federkonstante der Feder 31 durch die Skelettsteifigkeit des Absorptionsmaterials 21 vorgegeben wird.

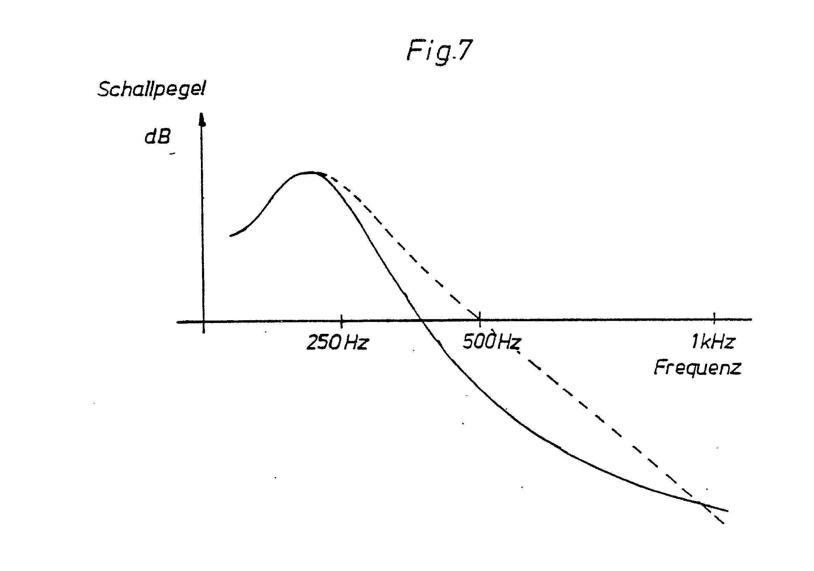

Die Übertragungsfunktion dieser erfindungsgemässen Schalldämmungsschicht wird in Fig. 7 dargestellt. Das Dämpfungs/Frequenzverhalten der Auskleidung nach Fig. 1, also die Darstellung nach Fig. 2, ist in Fig. 7 gestrichelt zu Vergleichszwecken eingetragen, während die durchgezogene Linie das Dämpfungsverhalten der erfindungsgemässen Auskleidung zeigt. Daraus ist zu ersehen, dass insbesondere in dem wesentlichen Bereich zwischen etwa 200 Hz und 1 kHz die Schallabstrahlung deutlich geringer ist als die der herkömmlichen Auskleidung, während im Bereich über 1 kHz das Verhalten der Auskleidung mit Tilgerschicht eine höhere Schallabstrahlung ausweist als die der herkömmlichen. In diesem Bereich jedoch ist das Dämpfungsverhalten bereits so hoch, dass die schlechtere Schalldämmung der erfindungsgemässen Auskleidung ohne Bedeutung ist, während gerade der Bereich zwischen 250 und 650 Hz, der der problematischste ist und im bevorzugten Bereich von 5- und 6-Zylinder-Motoren liegt, eine deutlich bessere Dämpfung aufweist.

Für die Schalldämmungsauskleidung bietet sich an, dass in einer Gestaltungsalternative die Deckschicht 20 durch die Trägerschicht der bei Kraftfahrzeugen verwendeten Teppiche zum Auskleiden des Fahrzeuginnern gebildet sind. Die übliche spezifische Masse einer derartigen Trägerschicht liegt bei etwa 0,8 kg/m² und ist somit durchaus geeignet, die Funktion der Deckschicht zu übernehmen. Die Tilgerschicht wird dann auf etwa 3 kg/m² spezifische Masse ausgelegt.

Die Absorptionsschicht 21, die zwischen Tilgerschicht 22 und Deckschicht 20 verläuft, muss nicht notwendigerweise an allen Stellen gleich dick sein, es ist vielmehr durchaus günstig, in den Bereich der Perforationen 28 der Tilgerschicht 22 diese Perforationen bis in die Absorptionsschicht 21 weiterlaufen zu lassen und dort ebenfalls Material wegzunehmen, wodurch die Abstimmung dieser Absorptionsschicht 21 bezüglich ihrer Elastizität einfacher wird, da die Anforderungen an die Offenporigkeit der Schicht nicht mehr so hoch angesetzt werden müssen. Zudem führt die Materialersparnis auch zu Gewichtsersparnis. Nachteile dieser Ausführungsform sind jedoch in erhöhten Herstellungskosten zu erblicken.

## PATENTANSPRÜCHE

1. Schalldämmungsauskleidung mit
- einer Deckschicht (20),
- einer dazu parallel verlaufenden Materialschicht (24),
- einer mit Öffnungen (28) ausgestatteten, im wesentlichen parallel zur Deckschicht (20) verlaufenden steifen Platte (22),
- einer ersten Absorptionsschicht (23) zwischen der steifen Platte (22) und der Materialschicht (24), die Absorptionsmaterial mit einer ersten Steifigkeit enthält, und
- einer zweiten Absorptionsschicht (21) zwischen der steifen Platte (22) und der Deckschicht (20),
dadurch gekennzeichnet, dass
- die zweite Absorptionsschicht (21) aus Absorptionsmaterial besteht, und
- das Absorptionsmaterial beidseits der steifen Platte (22) unterschiedliche Steifigkeit aufweist,
- wodurch die steife Platte (22) als Tilgerschicht wirkt.

2. Schalldämmungsauskleidung nach Anspruch 1, dadurch gekennzeichnet, dass das Absorptionsmaterial (21, 23) zu beiden Seiten der Tilgerschicht (22) unterschiedliche Dicke aufweist.

3. Schalldämmungsauskleidung nach einem der vorhergehenden Ansprüche, dadurch gekennzeichnet, dass das zwischen Deckschicht (20) und Tilgerschicht (22) eingefügte Absorptionsmaterial (21) offenporig und elastisch relativ steif ist, und das zwischen Tilgerschicht (22) und Materialschicht (24) eingefügte Absorptionsmaterial (23) offenporig und relativ weich ist.

4. Schalldämmungsauskleidung nach einem der vorhergehenden Ansprüche, dadurch gekennzeichnet, dass als Deckschicht (20) die Trägerschicht eines Teppichs verwendet wird.

5. Schalldämmungsauskleidung nach einem der vorhergehenden Ansprüche, dadurch gekennzeichnet, dass das Absorptionsmaterial (21) zwischen Deckschicht und Tilgerschicht in dem Bereich der Öffnungen der Tilgerschicht (22) Ausnehmungen aufweist.

**Revendications**

1. Revêtement d'isolation acoustique comprenant une couche de recouvrement (20), une couche de matériau (24) qui s'étend parallèlement à celle-ci, une plaque rigide (22) munie d'ouvertures (28), pratiquement parallèle à la couche de recouvrement (20), une première couche d'absorption (23), disposée entre la plaque rigide (22) et la couche de matériau (24) et contenant une matière d'absorption qui présente une première rigidité, et une seconde couche d'absorption (21) entre la plaque rigide (22) et la couche de recouvrement (20), caractérisé en ce que la seconde couche d'absorption (21) contient de la matière d'absorption et en ce que la matière d'absorption présente, de part et d'autre de la plaque rigide (22), des rigidités différentes, ce qui fait que la plaque rigide (22) se comporte comme une couche d'amortissement.

2. Revêtement d'isolation acoustique selon la revendication 1, caractérisé en ce que la matière d'absorption (21, 23) de part et d'autre de la couche d'amortissement (22) présente des épaisseurs différentes.

3. Revêtement d'isolation acoustique selon la revendication 1 ou 2, caractérisé en ce que la matière d'absorption (21) intercalée entre la couche de recouvrement (20) et la couche d'amortissement (22) est une matière à pores ouverts et relativement rigide élastiquement, et en ce que la matière d'absorption (23) intercalée entre la couche d'amortissement (22) et la couche de matériau (24) est une matière à pores ouverts et relativement molle.

4. Revêtement d'isolation acoustique selon l'une quelconque des revendications 1 à 3, caractérisé en ce que la thibaude d'un tapis est utilisée comme couche de recouvrement (20).

5. Revêtement d'isolation acoustique selon l'une quelconque des revendications 1 à 4, caractérisé en ce que la matière d'absorption (21) entre la couche de recouvrement et la couche d'amortissement présente des creux dans la région des ouvertures de la couche d'amortissement (22).

**CLAIMS**

1. Sound insulating lining with
   – a covering layer (20),
   – a material layer (24) disposed parallel thereto,
   – a rigid plate (22) which is provided with apertures (28) and is situated substantially parallel to the covering layer (20),
   – a first absorption layer (23) between the rigid plate (22) and the material layer (24), containing absorption material with a first rigidity, and
   – a second absorption layer (21) between the rigid plate (22) and the covering layer (20), characterised in that
   – the second absorption layer (21) contains absorption material, and
   – the absorption material has different rigidity at the two sides of the rigid plate (22),
   – whereby the rigid plate (22) acts as a deadening layer.

2. Sound insulating lining according to claim 1, characterised in that the absorption material (21, 23) is of different thickness at the two sides of the deadening layer (22).

3. Sound insulating lining according to one of the preceding claims, characterised in that the absorption material (21) interposed between covering layer (20) and deadening layer (22) is of open-pore type and elastically relatively rigid, and the absorption material (23) interposed between deadening layer (22) and material layer (24) is of open-pore type and relatively soft.

4. Sound insulating lining according to one of the preceding claims, characterised in that the supporting layer of a carpet is used as the covering layer (20).

5. Sound insulating lining according to one of the preceding claims, characterised in that the absorption material (21) between covering layer and deadening layer comprises openings in the region of the apertures of the deadening layer (22).

0 104 357

Fig.1

Fig.2

Schallpegel dB

200 Hz          Frequenz Hz

Fig.3

0 104 357

1/3

Fig.4

Fig.5

Fig.6

7

3/3

Fig.7

Schallpegel

dB

250 Hz    500 Hz    1 kHz
                    Frequenz